# EUROPEAN PATENT SPECIFICATION

(11) **EP 1 264 542 B1**
(45) Date of publication and mention of the grant of the patent: **07.09.2005**
(21) Application number: 02253798.9
(22) Date of filing: 30.05.2002
(51) Int. Cl.: A01K 91/03

(54) **Angling rig device**
Leinenanordnung zum Angeln
Monture pour la pêche

(30) Priority: 05.06.2001 GB 0113635
(43) Date of publication of application: 11.12.2002
(73) Proprietor: Fox Design International Limited, Hainault, Essex 1G6 3UT (GB)
(72) Inventor: Cottis, Maxwell Stewart, Braintree, Essex CM7 9FD (GB); Marley, Russell, Harlow, Essex CM18 7RR (GB)
(74) Representative: Crouch, David John

(56) References cited:
- GB-A- 2 354 146
- US-A- 3 130 516
- US-A- 4 482 264
- US-A- 5 150 540

## Description

The present invention relates to an angling rig device, especially but not exclusively for use in retaining a weight on a line.

GB-A-2354146 describes a device in the form of a line clip having a hollow body. The hollow body receives part of a swivel hook link which connects a fishing line to a hook length. A weight is retained by the clip. A hole in the body of the clip enables a tie in the form of a loop of line to be inserted through both the hole and one of the swivels of the swivel hook link which is inside the body of the clip. If the weight is snagged in weeds or tree roots while a fish on the hook is being played, a sufficient force will be exerted to release the weight from the clip. The tie prevents the fish being played through the snag.

A disadvantage of this construction is that the tie may become tangled itself.

The previously proposed construction of line clip also suffers the disadvantage that it is difficult to align the swivel at one end of the hook link with the through-hole in the body of the clip.

The present invention seeks to overcome these disadvantages.

US-A-4482264 discloses a universal joint for connecting ropes for use in fishing. Two U-rods connect two ropes together. The two U-rods are supported by a spindle so as to be rotatable relative to each other. At least one of the two U-rods is supported oscillatably by the spindle via a pin mounted detachably in a. direction usually perpendicular to the axis of rotation of the spindle. When the connected two adjacent ropes are about to be twisted relative to each other, the two U-rods make relative rotation, absorbing possible twists. When the connected rope is bent, the U-rod swings to prevent the occurrence of excessive stress ascribable to the bend. The spindle or pin is provided with a retaining means for preventing the pin from slipping off.

US-A-3130516 discloses a protective cover guard for a swivel having a body and an end ring rotatably attached thereto at each end thereof. The ring is adapted for connection to a fishing line. The guard comprises a cylindrical member. A portion of the said member tapers towards one end thereof. The member has a longitudinally extending bore therein. The bore is adapted to receive such a swivel for rotation therein. The guard also has a constriction in such bore at the said one end of said member. A diametral groove formed within the said constriction is adapted to receive and hold by a wedging action the leading end ring of such a swivel when inserted therein to restrain the end ring against rotation relatively thereto, the said constriction also allowing the passage of a fishing line therethrough.

The present invention is directed to an angling rig device having a hollow body which accommodates a swivel at one end of a swivel hook link, the body being formed with a through-hole and that swivel being in registration with the through-hole, in which the internal surfaces of the body of the device are such as to rotate the swivel as the latter is inserted into the device, so that the swivel lies transversely of the through-hole and the axis of the through-hole extends through the swivel, and in which a tight-fitting retainer is located in the through-hole so that it extends through the swivel.

This avoids the need for a looped tie, and so reduces the likelihood of tangling.

Preferably at least one end of the retainer is flush with the outside surface of the body of the device to reduce the likelihood of the line being caught on the retainer.

One preferred construction of the retainer which improves the security with which it is held in the device is a T-shape, with the "uptight" of the T extending through that end of the swivel and the "horizontal" of the T being received in a recess in the body of the device.

Accordingly, this aspect of the invention is directed to an angling rig device having a hollow body which accommodates a swivel at one end of a swivel hook link, the body being formed with a through-hole and that swivel being in registration with the through-hole, in which the internal surfaces of the body of the device are such as to rotate the swivel as the latter is inserted into the device, so that the swivel lies transversely of the through-hole and the axis of the through-hole extends through the swivel.

One such construction of device that is relatively easy to fabricate is one in which the interior of the body of the device tapers in a plane which is generally parallel to the axis of the through-hole.

It is naturally desirable to provide a device which incorporates both aspects of the present invention.

Whether only one or both aspects are present, it is desirable for the device to be in the form of a line clip for releaseably securing a weight to the line.

Such a clip is preferably provided with a hook which has one end integral with or attached to the body of the device, and its other end extending generally parallel to but spaced from an elongate end of the body of the clip.

Preferably the hook is resilient so that the free end thereof can be urged against that end of the body of the device by a rubber sleeve, for example.

The device preferably comprises a plastics material.

Each aspect of the present invention extends to an angling rig which incorporates a device embodying that aspect of the invention.

An example of a device embodying both aspects of the present invention will now be described with reference to the accompanying drawings, in which:
- Figure 1: shows a diagrammatic view of an angling rig which incorporates a device which embodies the present invention;
- Figure 2: shows an axial sectional view of the said device shown in Figure 1;
- Figure 3: shows a further view as in Figure 2 but with a part of the device positioned slightly differently from its position shown in Figure 2;
- Figure 4: shows a further axial sectional view of the device shown in Figure 2, the plane of the section in Figure 4 being at right angles to the plane of the section in Figure 2;
- Figure 5: shows an underneath view of the device shown in Figure 2; and
- Figure 6: shows a side view of the device shown in Figure 2.

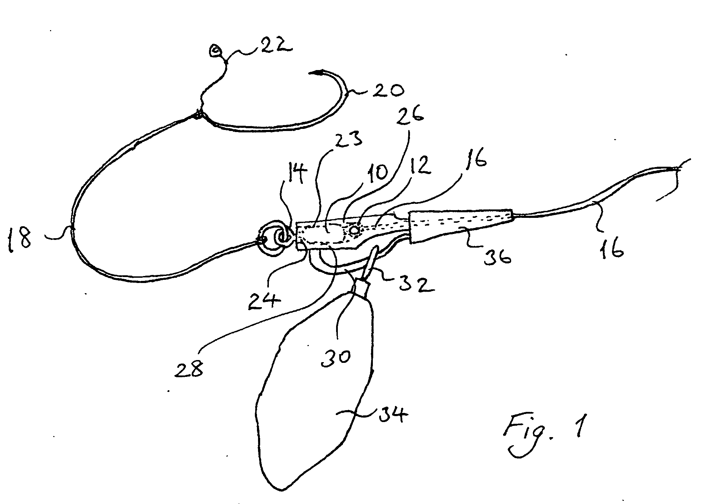

The angling rig shown in Figure 1 comprises a swivel hook link 10 having a swivel 12, 14 at both ends thereof. Each swivel 12, 14 is rotatable about a diameter thereof relative to the rest of the hook link 10. A line 16 is attached to the swivel 12 and a hook length 18 is attached to the swivel 14. A fish hook 20 is attached to the other end of the hook length, and bait may be secured to a free portion 22 of the hook length 18 at the hook end.

A body 23 of the hook link 10, the swivel 12, and that end of the line 16 attached to that swivel 12 are accommodated within a hollow 24 of the body 26 of a line clip 28.

The clip 28 is formed with a weight hook 30 onto which is threaded the ring 32 of a weight 34. A rubber sleeve 36 surrounds the free end of the weight hook 30, an end portion of the body of the line clip 28, and that portion of the line 16 which is adjacent to the body of the clip 28.

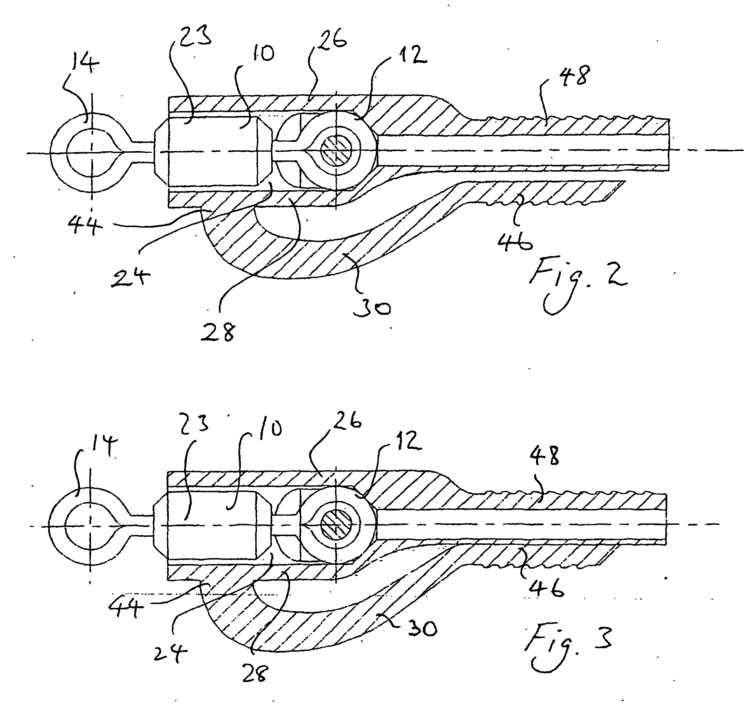

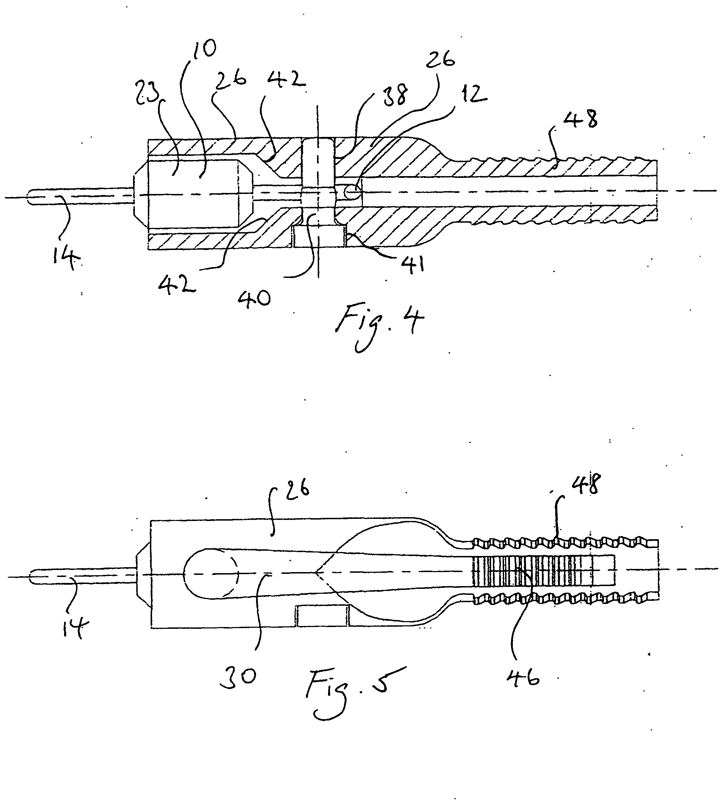

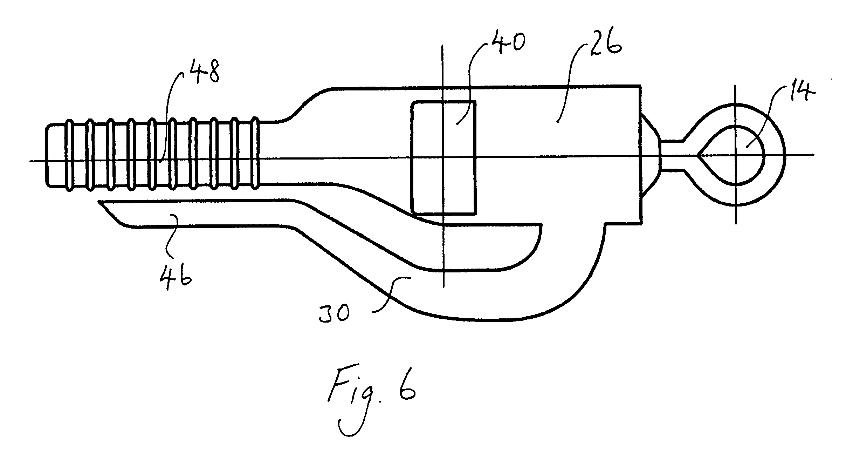

The construction of the line clip 28 can be seen more clearly in Figures 2 to 6. Thus the body 26 is formed with a through-hole 38. A plastics T-shaped rivet 40 has the "upright" of its T extending through both the through-hole 38 and the ring-shaped swivel 12. The "horizontal" of the T is embedded within a recess 41 in the outside of the body 26. The rivet forms a tight-fit with the body 26. Both the end of the rivet constituted by the bottom of the "upright" of the T and the end of the rivet constituted by the outside face of the "horizontal" of the T are flush with the outside suface of the body 26.

Interior surfaces 42 of the body 26 are so formed that the hollow 24 tapers in a plane which is generally parallel with the axis of the through-hole 38.

The weight hook 30 has one end 44 integral with the body 26, and its other end 46 extending generally parallel to but in an unstressed condition spaced from an elongate end 48 of the body 26. The weight hook 30 is resilient so that the free end 46 thereof can be urged against that end 48 of the body 26 by the rubber sleeve 36. The outside surfaces of the elongate end 48 of the body 26 and the free end 46 of the weight hook 30 are ribbed transversely, to create a resistance to removal of the sleeve 36.

When the line clip 28 is assembled with the rest of a rig as shown in Figure 1, the sleeve 36 and the clip 28 are threaded onto the line 16 before the latter is tied to the swivel 12. The latter is then inserted into the hollow 24, and the surfaces 42 ensure that the swivel 12 becomes transverse to the through-hole 38. This enables the rivet 40 to be inserted into the through-hole 38 and through the swivel 12 at the same time. Further insertion of the rivet snaps its "horizontal" into the recess 41.

When the rig thus assembled is in use, the construction of the clip 28 ensures that if the weight is snagged in weeds or tree roots while a fish caught on the fish hook 20 is being played, any pull by the fish will cause the ring 32 of the weight 34 to ride towards the free end 46 of the weight hook 30, prise a gap between that end 46 of the hook and the elongate end 48 of the body 26, and slide the sleeve 38 away until the ring 32 slips off the weight hook 30 completely.

Many modifications and variations to the illustrated construction of line clip 28 may occur to the reader without taking the resulting construction outside he scope of the present invention. Thus for example the rivet 40 may have a round head instead of the "horizontal" of a T. The internal surfaces 42 may be curved where they meet the other internal surfaces of the body 26. The weight hook 30 may be a loop integral at both ends with the body 26, the ring 32 being releasable under appropriate stress from the weight 34.

## Claims

1. An angling rig device having a hollow body (26) which accommodates a swivel (12) at one end of a swivel hook link (10), the body (26) being formed with a through-hole (38) and that swivel (12) being in registration with the through-hole (38), **characterised in that** the internal surfaces of the body (26) of the device are such as to rotate the swivel (12) as the latter is inserted into the device, so that the swivel (12) lies transversely of the through-hole (38) and the axis of the through-hole (38) extends through the swivel (12), and **in that** a tight-fitting retainer (40) is located in the through-hole (38) so that it extends through the swivel (12).

2. A device according to claim 1, **characterised in that** at least one end of the retainer (40) is flush with the outside surface of the body (26) of the device to reduce the likelihood of the line being caught on the retainer (40).

3. A device according to claim 1, **characterised in that** the retainer (40) is T-shaped, with the "upright" of the T extending through that end (12) of the hook link (10) and the "horizontal" of the T being received in a recess in the body (26) of the device.

4. A device according to any preceding claim, **characterised in that** the interior of the body (26) of the device tapers in a plane which is generally parallel to the axis of the through-hole (38).

5. A device according to any preceding claim, **characterised in that** the device is in the form of a line clip (28) for releaseably securing a weight (34) to the line.

6. A device according to claim 5, **characterised in that** the clip (28) is provided with a hook (30) which has one end integral with or attached to the body (26) of the device, and its other end extending generally parallel to but spaced from an elongate end (48) of the body (26) of the clip.

7. A device according to claim 6, **characterised in that** the hook (30) is resilient so that the free end thereof can be urged against that end (48) of the body (26) of the device by a rubber sleeve, for example.

8. A device according to any preceding claim, **characterised in that** the device comprises a plastics material.

9. An angling rig, **characterised in that** the rig incorporates a device as claimed in any preceding claim.

## Patentansprüche

1. Angelausrüstungsvorrichtung, die einen Hohlkörper (26) besitzt, der einen an einem Ende eines Drehhaken-Verbindungsgliedes (10) vorhandenen Drehzapfen (12) aufnimmt, wobei in dem Körper (26) ein Durchgangsloch (38) ausgebildet ist und der Drehzapfen (12) auf das Durchgangsloch (38) ausgerichtet ist, **dadurch gekennzeichnet, dass** die inneren Oberflächen des Körpers (26) der Vorrichtung derart sind, dass sich der Drehzapfen (12) dreht, wenn er in die Vorrichtung eingeführt wird, so dass der Drehzapfen (12) quer zu dem Durchgangsloch (38) liegt und die Achse des Durchgangslochs (38) durch den Drehzapfen (12) verläuft, und dass sich ein dicht sitzender Halter (40) in dem Durchgangsloch (38) befindet, so dass er durch den Drehzapfen (12) verläuft.

2. Vorrichtung nach Anspruch 1, **dadurch gekennzeichnet, dass** wenigstens ein Ende des Halters (40) mit der äußeren Oberfläche des Körpers (26) der Vorrichtung bündig ist, um die Wahrscheinlichkeit, dass sich die Leine am Halter (40) verfängt, zu verringern.

3. Vorrichtung nach Anspruch 1, **dadurch gekennzeichnet, dass** der Halter (40) T-förmig ist, wobei sich die "aufrechte Linie" des T durch jenes Ende (12) des Haken-Verbindungsgliedes (10) erstreckt und die "horizontale Linie" des T in einer Aussparung im Körper (26) der Vorrichtung aufgenommen ist.

4. Vorrichtung nach einem vorhergehenden Anspruch, **dadurch gekennzeichnet, dass** der Innenraum des Körpers (26) der Vorrichtung in einer Ebene, die zu der Achse der Durchgangsbohrung (38) im Allgemeinen parallel ist, konisch zuläuft.

5. Vorrichtung nach einem vorhergehenden Anspruch, **dadurch gekennzeichnet, dass** die Vorrichtung die Form eines Leinenclips (28) hat, um an der Leine ein Gewicht (34) lösbar zu befestigen.

6. Vorrichtung nach Anspruch 5, **dadurch gekennzeichnet, dass** der Clip (28) mit einem Haken (30) versehen ist, wovon ein Ende mit dem Körper (26) der Vorrichtung einteilig ausgebildet oder daran befestigt ist und das andere Ende sich im Allgemeinen parallel zu einem lang gestreckten Ende (48) des Körpers (26) des Clips, jedoch in einem Abstand hiervon erstreckt.

7. Vorrichtung nach Anspruch 6, **dadurch gekennzeichnet, dass** der Haken (30) elastisch ist, so dass sein freies Ende beispielsweise durch eine Gummibuchse gegen jenes Ende (48) des Körpers (26) der Vorrichtung gedrängt werden kann.

8. Vorrichtung nach einem vorhergehenden Anspruch, **dadurch gekennzeichnet, dass** die Vorrichtung einen Kunststoff umfasst.

9. Angelausrüstung, **dadurch gekennzeichnet, dass** die Ausrüstung eine Vorrichtung nach einem vorhergehenden Anspruch enthält.

## Revendications

1. Une monture pour la pêche, comprenant un corps (26) creux, recevant un pivot (12) à une extrémité d'une liaison à crochet pivotant (10), le corps (26) étant muni d'un trou traversant (38) et ledit pivot (12) étant en coïncidence avec le trou traversant (38), **caractérisée en ce que** les surfaces internes du corps (26) du dispositif sont telles qu'elles permettent de faire tourner le pivot (12) lorsque ce dernier est introduit à l'intérieur du dispositif, de manière que le pivot (12) soit orienté dans la direction transversale de celle du trou traversant (38) et que l'axe du trou traversant (38) s'étende à travers le pivot (12), et **en ce qu'**un élément de retenue (40) à ajustement serré est placé dans le trou traversant (38), de manière à s'étendre à travers le pivot (12).

2. Un dispositif selon la revendication 1, **caractérisé en ce qu'**au moins une extrémité de l'élément de retenue (40) est en alignement avec la surface extérieure du corps (26) du dispositif, afin de réduire le risque que la ligne soit emprisonnée sur l'élément de retenue (40).

3. Un dispositif selon la revendication 1, **caractérisé en ce que** l'élément de retenue (40) est en forme de T, la "barre montante" du T s'étendant à travers cette extrémité (12) de la liaison à crochet (10) et la "barre horizontale" du T étant logée dans une cavité ménagée dans le corps (26) du dispositif.

4. Un dispositif selon l'une quelconque des revendications précédentes, **caractérisé en ce que** l'intérieur du corps (26) du dispositif va en s'effilant dans un plan globalement parallèle à l'axe du trou traversant (38).

5. Un dispositif selon l'une quelconque des revendications précédentes, **caractérisé en ce que** le dispositif se présente sous la forme d'une attache de ligne (28), pour fixer de façon désolidarisable une masse ou lest (34) à la ligne.

6. Un dispositif selon la revendication 5, **caractérisé en ce que** l'attache (28) est munie d'un crochet (30), ayant une extrémité réalisée d'une seule pièce ou attachée au corps (26) du dispositif, et son autre extrémité s'étendant globalement parallèlement à, mais en étant espacée d'une extrémité (48) allongée du corps (26) de l'attache.

7. Un dispositif selon la revendication 6, **caractérisé en ce que** le crochet (30) est élastique, de manière que son extrémité libre puisse être sollicitée contre cette extrémité (48) du corps (26) du dispositif, par une douille en caoutchouc, par exemple.

8. Un dispositif selon l'une quelconque des revendications précédentes, **caractérisé en ce que** le dispositif est composé de matière plastique.

9. Une monture de pêche, **caractérisée en ce que** la monture comprend un dispositif tel qu'indiqué à l'une quelconque des revendications précédentes.
